(19) Europäisches Patentamt
European Patent Office
Office européen des brevets

(11) **EP 4 428 946 A1**

(12) **EUROPEAN PATENT APPLICATION**
published in accordance with Art. 153(4) EPC

(43) Date of publication:
**11.09.2024 Bulletin 2024/37**

(21) Application number: **21962874.0**

(22) Date of filing: **04.11.2021**

(51) International Patent Classification (IPC):
**H01M 4/36** (2006.01)

(52) Cooperative Patent Classification (CPC):
**H01M 4/36; Y02E 60/10**

(86) International application number:
**PCT/CN2021/128701**

(87) International publication number:
**WO 2023/077357 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventor: **LI, Xin**
**Ningde, Fujian 352100 (CN)**

(74) Representative: **Icosa**
**83 avenue Denfert-Rochereau**
**75014 Paris (FR)**

(54) **NEGATIVE ELECTRODE ACTIVE MATERIAL, ELECTROCHEMICAL DEVICE, AND ELECTRONIC DEVICE**

(57)     This application relates to a negative active material, an electrochemical device, and an electronic device. The negative active material includes silicon-oxygen particles and a silicon-oxygen-carbon layer located on surfaces of the silicon-oxygen particles, where the silicon-oxygen-carbon layer includes silicon-oxygen-carbon composite particles. Applied to an electrochemical device, the negative active material improves the cycle performance significantly.

FIG. 5

EP 4 428 946 A1

**Description**

**TECHNICAL FIELD**

This application relates to the field of energy storage, and in particular, to a negative active material, an electrochemical device, and an electronic device.

**BACKGROUND**

In recent years, silicon is considered as a negative electrode material most likely to be applied massively in lithium-ion batteries by virtue of a reversible capacity as high as 4200 mAh/g. However, silicon expands in volume by approximately 400% during charging and discharging. The ultra-high volume expansion results in damage to a solid electrolyte interface (SEI). The fresh material surface exposed due to the interface damage keeps consuming an electrolyte solution, thereby leading to recurrent formation of the SEI and giving rise to a large number of SEI by-products. Currently, one of the main approaches to improving the cycle performance of a silicon-based material is carbon coating on the surface of the silicon-based material. However, a single carbon coating layer is unable to effectively withstand the volume expansion of a silicon-oxygen material that occurs during electrochemical reactions, thereby limiting wider applicability of the material.

**SUMMARY**

To solve the problems in the prior art, this application provides a negative active material and an electrochemical device containing the negative active material. When applied to an electrochemical device, the negative active material improves the cycle performance of the electrochemical device significantly.

According to a first aspect, the negative active material disclosed herein includes silicon-oxygen particles and a silicon-oxygen-carbon layer located on surfaces of the silicon-oxygen particles. The silicon-oxygen-carbon layer includes silicon-oxygen-carbon composite particles. The negative active material of this application effectively improves the interfacial stability of the silicon-oxygen material during cycling by utilizing the structural stability of the silicon-oxygen-carbon material on the surface, thereby improving the capacity retention rate and alleviating the expansion rate of the electrochemical device that uses the negative active material.

According to some embodiments of this application, the negative active material satisfies at least one of the following conditions (a) to (c): (a) a $^{29}$Si MAS NMR spectrum of the negative active material exhibits peaks at -5 ppm $\pm$ 2 ppm, -35 ppm $\pm$ 2 ppm, and -75 ppm $\pm$ 2 ppm, respectively; (b) a $^{29}$Si MAS NMR spectrum of the negative active material exhibits a peak at -100 ppm $\pm$ 2 ppm; or (c) a full-width-at-half-maximum of a peak exhibited at -5 ppm $\pm$ 2 ppm in a $^{29}$Si MAS NMR spectrum of the negative active material is 20 ppm to 25 ppm.

According to some embodiments of this application, a $^{29}$Si MAS NMR spectrum of the negative active material exhibits peaks at -5 ppm $\pm$ 2 ppm, -35 ppm $\pm$ 2 ppm, -75 ppm $\pm$ 2 ppm, and -100 ppm $\pm$ 2 ppm, respectively. The $^{29}$Si MAS NMR spectrum of the negative active material of this application exhibits absorption peaks in the above ranges, indicating that the carbon atom, the silicon atom, and the oxygen atom in the material are bonded to each other. The bonding of the three types of atoms of carbon, silicon and oxygen is conducive to improving the structural stability of the silicon-oxygen-carbon material.

According to some embodiments of this application, the negative active material satisfies at least one of the following conditions (d) to (g): (d) a thickness of the silicon-oxygen-carbon layer is d, satisfying: 10 nm $\leq$ d $\leq$ 2000 nm; (e) the silicon-oxygen-carbon layer includes amorphous silicon-oxygen-carbon composite particles; (f) a particle diameter of the silicon-oxygen-carbon composite particles is 1 nm to 60 nm; or (g) a particle diameter of at least 70% of the silicon-oxygen-carbon composite particles is 20 nm to 46 nm.

According to some embodiments of this application, a thickness d of the silicon-oxygen-carbon layer satisfies: 10 nm $\leq$ d $\leq$ 2000 nm. When the thickness of the silicon-oxygen-carbon layer is relatively small, the silicon-oxygen-carbon layer is unable to effectively protect the interface, thereby decreasing the capacity retention rate and increasing the expansion rate of the electrochemical device. When the thickness of the silicon-oxygen-carbon layer is larger, although the capacity retention rate is higher and the expansion rate of the electrochemical device is lower, more active lithium storage sites are lost, thereby resulting in the loss of the energy density of the electrochemical device.

According to some embodiments of this application, the silicon-oxygen-carbon layer includes amorphous silicon-oxygen-carbon composite particles. In the amorphous silicon-oxygen-carbon composite particles, elements are distributed uniformly, and the silicon grains are uniformly dispersed in a Si-O-C framework, so that the silicon-oxygen-carbon material maintains the most stable structure, thereby well protecting the interface of the silicon-oxygen material.

According to some embodiments of this application, a particle diameter of the silicon-oxygen-carbon composite particles is 1 nm to 60 nm. In some embodiments, a particle diameter of at least 70% of the silicon-oxygen-carbon composite particles is 20 nm to 46 nm. When the particle diameter of the silicon-oxygen-carbon composite particles is overly small, the electrical conductivity of the negative active material is low, the gravimetric capacity of the material decreases, the cycle capacity retention rate of the electrochemical device decreases, and the expansion rate of the electrochemical device increases. When the particle diameter of the silicon-oxygen-carbon composite particles is overly large, the ion conductivity of the negative active material deteriorates, the utilization rate of the negative active material decreases, and therefore, the gravimetric capacity of the material decreases, the cycle capacity retention rate of the electrochemical device decreases, and the expansion rate of the electrochemical device increases.

According to some embodiments of this application, a thickness d of the silicon-oxygen-carbon layer and $D_{v50}$ of the silicon-oxygen particles satisfy: $0.0015 \leq d/D_{v50} \leq 0.8$. In some embodiments of this application, $D_{v50}$ of the silicon-oxygen particles is 2.5 $\mu$m to 10 $\mu$m. When the particle diameter of the silicon-oxygen particles is overly small, the silicon-oxygen particles are bonded to each other. The stress of the negative active material is not distributed uniformly during lithium intercalation, thereby decreasing the capacity retention rate and increasing the expansion rate of the electrochemical device. When the particle diameter of the silicon-oxygen particles is overly large, the thickness of the silicon-oxygen-carbon layer is relatively small, thereby increasing the stress on the silicon-oxygen-carbon layer. The silicon-oxygen-carbon layer is unable to effectively protect the interface, thereby decreasing the capacity retention rate and increasing the expansion rate of the electrochemical device.

According to some embodiments of this application, the silicon-oxygen particles are $SiO_x$, where x satisfies: $0.5 \leq x \leq 1.5$. In some embodiments, the silicon-oxygen particles include at least two of Si, SiO, or $SiO_2$. In some embodiments, the silicon-oxygen particles are SiO.

According to some embodiments of this application, the negative active material satisfies at least one of the following conditions (h) to (j): (h) based on a mass of the negative active material, a mass percent of carbon is a%, where $0.9 \leq a \leq 11$; (i) based on a mass of the negative active material, a mass percent of silicon is b%, where $50 \leq b \leq 63$; or (j) based on a mass of the negative active material, a mass percent of carbon is a%, and a mass percent of silicon is b%, where $0.015 \leq a/b \leq 0.25$. According to some embodiments of this application, based on a mass of the negative active material, a mass percent a% of carbon satisfies: $0.9 \leq a \leq 11$. According to some embodiments of this application, based on a mass of the negative active material, a mass percent b% of silicon satisfies: $50 \leq b \leq 63$. According to some embodiments of this application, based on a mass of the negative active material, a mass percent a% of carbon and a mass percent b% of silicon satisfy: $0.015 \leq a/b \leq 0.25$.

According to some embodiments of this application, the negative active material satisfies at least one of the following conditions (e) to (h): (k) in an X-ray diffraction pattern of the negative active material, a maximum intensity value corresponding to a 20 diffraction angle range of 28.0° to 29.0° is $I_2$, and a maximum intensity value corresponding to a diffraction angle range of 20.5° to 21.5° is $I_1$, satisfying $0 < I_2/I_1 \leq 1$; (1) a specific surface area of the negative active material is 1 $m^2/g$ to 50 $m^2/g$; (m) a powder conductivity of the negative active material is 2.0 S/cm to 30 S/cm; or (n) the negative active material further includes graphite. According to some embodiments of this application, the negative active material further includes graphite. The added graphite can increase the gravimetric capacity of the negative active material. In some embodiments, the graphite includes at least one of natural graphite, artificial graphite, or mesocarbon microbeads.

According to some embodiments of this application, a method for preparing the negative active material includes the following steps: heat-treating a solution containing an oxide of silicon, a silicon source, a carbon source, and an organic solvent to obtain a heat-treated powder; and calcining the heat-treated powder, where the heat treatment is performed at a temperature of 80 °C to 120 °C; and/or the calcination includes: calcining at a temperature of 600 °C to 1200 °C. In some embodiments, the calcination includes: calcining by increasing the temperature to 600 °C to 1200 °C at a heating rate of 3 °C/min to 10 °C/min. In some embodiments, the calcination includes: calcining by increasing the temperature to 800 °C to 1200 °C at a heating rate of 3 °C/min to 10 °C/min.

According to some embodiments of this application, the heat treatment is performed at a temperature of 80 °C to 120 °C. When the temperature of the heat treatment is overly high, the crosslinking temperature of the oxide of silicon, the silicon source, and the carbon source is too high, and the uniformity of the shrinkage stress during the crosslinking deteriorates, thereby increasing defects of the material. Consequently, the gravimetric capacity of the resulting negative active material is decreased, and the silicon-oxygen-carbon layer is thinned.

According to some embodiments of this application, the calcination is performed at a temperature of 600 °C to 1200 °C. When the calcination temperature is overly high, the grains of the material become larger, and even crystallization peaks appear, thereby deteriorating ion conductivity of the negative active material, decreasing the gravimetric capacity, and in turn, impairing the cycle capacity retention rate and exacerbating the expansion rate of the electrochemical device.

According to some embodiments of this application, the heating rate is 3 °C/min to 10 °C/min. When the heating rate is lower, the formed crystal nuclei become smaller, thereby deteriorating the electrical conductivity of the negative active material, and in turn, decreasing the gravimetric capacity of the negative active material, decreasing the cycle capacity retention rate of the electrochemical device, and increasing the expansion rate. When the heating rate is higher, the crystal grains become larger, thereby deteriorating the ion conductivity of the negative active material, decreasing the utilization rate of the negative active material, and reducing the cycle capacity retention rate and increasing the expansion rate of the electrochemical device.

According to a second aspect, this application provides an electrochemical device. The electrochemical device includes a negative electrode. The negative electrode includes the negative active material according to the first aspect of this application. According to some embodiments of this application, a film resistance of the negative electrode is 0.2 $\Omega$ to 1 $\Omega$.

According to a third aspect, this application provides an electronic device. The electronic device includes the electrochemical device according to the second aspect of this application.

This application provides a negative active material. The negative active material effectively improves the interfacial stability of the silicon-oxygen material during cycling by utilizing the structural stability of the silicon-oxygen-carbon material on the surface, thereby improving the capacity retention rate and alleviating the expansion rate of the electrochemical device that uses the negative active material.

**BRIEF DESCRIPTION OF DRAWINGS**

FIG. 1 is a schematic structural diagram of a negative active material according to some embodiments of this application, where 1 represents $SiO_x$ and 2 represents a silicon-oxygen-carbon layer;
FIG. 2 is a SEM image of a negative active material according to Embodiment 1;
FIG. 3 is a SEM image of a negative active material according to Embodiment 1;
FIG. 4 is an EDS spectrum of a negative active material according to Embodiment 1;
FIG. 5 is an NMR spectrum of a negative active material according to Embodiment 1; and
FIG. 6 is an XRD pattern of a negative active material according to Embodiment 1.

**DETAILED DESCRIPTION OF EMBODIMENTS**

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

**I. Negative active material**

The negative active material disclosed herein includes silicon-oxygen particles and a silicon-oxygen-carbon layer located on surfaces of the silicon-oxygen particles. The silicon-oxygen-carbon layer includes silicon-oxygen-carbon composite particles. The negative active material of this application effectively improves the interfacial stability of the silicon-oxygen material during cycling by utilizing the structural stability of the silicon-oxygen-carbon material on the surface, thereby improving the capacity retention rate and alleviating the expansion rate of the electrochemical device that uses the negative active material.

According to some embodiments of this application, a $^{29}$Si MAS NMR spectrum of the negative active material exhibits peaks at -5 ppm $\pm$ 2 ppm, -35 ppm $\pm$ 2 ppm, and -75 ppm $\pm$ 2 ppm, respectively. According to some embodiments of this application, a $^{29}$Si MAS NMR spectrum of the negative active material exhibits a peak at -100 ppm $\pm$ 2 ppm. The $^{29}$Si MAS NMR spectrum of the negative active material of this application exhibits absorption peaks in the above ranges, indicating that the carbon atom, the silicon atom, and the oxygen atom in the material are bonded to each other. The linking of the three types of atoms of carbon, silicon and oxygen is conducive to improving the structural stability of the silicon-oxygen-carbon material.

According to some embodiments of this application, a full-width-at-half-maximum of a peak exhibited at -5 ppm $\pm$ 2 ppm in a $^{29}$Si MAS NMR spectrum of the negative active material is 20 ppm to 25 ppm, for example, 21 ppm, 22 ppm, 23 ppm, 24 ppm, or a value falling within a range formed by any two thereof.

In this application, in the $^{29}$Si MAS NMR spectrum, an absorption peak at a chemical shift of -5 ppm $\pm$ 2 ppm is attributed to silicon in a $SiOC_3$ group. An absorption peak at a chemical shift of -35 ppm $\pm$ 2 ppm is attributed to silicon in a $SiO_2C_2$ group. An absorption peak at a chemical shift of -75 ppm $\pm$ 2 ppm is attributed to silicon in a $SiO_3C$ group. The absorption peak at a chemical shift of -100 ppm is attributed to tetrahedrally coordinated silicon bonded to oxygen in a silicon-oxygen tetrahedron ($SiO_4$ group).

According to some embodiments of this application, a thickness of the silicon-oxygen-carbon layer is d, satisfying: $10 \, nm \leq d \leq 2000 \, nm$. In some embodiments, d is 20 nm, 40 nm, 60 nm, 80 nm, 90 nm, 120 nm, 150 nm, 200 nm, 300 nm, 500 nm, 700 nm, 900 nm, 1000 nm, 1200 nm, 1500 nm, 1700 nm, 1900 nm, or a value falling within a range formed by any two thereof. In some embodiments, $50 \, nm \leq d \leq 500 \, nm$. When the thickness of the silicon-oxygen-carbon layer is relatively small, the silicon-oxygen-carbon coating layer is unable to effectively protect the interface, thereby decreasing the capacity retention rate and increasing the expansion rate of the electrochemical device. When the thickness of the silicon-oxygen-carbon layer is larger, although the capacity retention rate is higher and the expansion rate of the electrochemical device is lower, more active lithium storage sites are lost, thereby resulting in the loss of the energy density of the electrochemical device.

According to some embodiments of this application, the silicon-oxygen-carbon layer includes amorphous silicon-oxygen-carbon composite particles. In the amorphous silicon-oxygen-carbon composite particles, elements are distributed uniformly, and the silicon grains are uniformly dispersed in a Si-O-C framework, so that the silicon-oxygen-carbon material maintains the most stable structure, thereby well protecting the interface of the silicon-oxygen material.

According to some embodiments of this application, a particle diameter of the silicon-oxygen-carbon composite particles is 1 nm to 60 nm. In some embodiments, the particle diameter of the silicon-oxygen-carbon composite particles is 5 nm to 55 nm, 5 nm to 50 nm, 10 nm to 55 nm, 10 nm to 50 nm, 10 nm to 48 nm, 15 nm to 55 nm, 15 nm to 50 nm, 15 nm to 48 nm, 20 nm to 50 nm, 20 nm to 48 nm, 25 nm to 50 nm, 25 nm to 48 nm, 30 nm to 55 nm, 40 nm to 55 nm, or the like. In some embodiments, the particle diameter of at least 70%, such as 75%, 80%, 85%, 90%, or 95%, of the silicon-oxygen-carbon composite particles is 15 nm to 55 nm. In some embodiments, the particle diameter of at least 70%, such as 75%, 80%, 85%, 90%, or 95%, of the silicon-oxygen-carbon composite particles is 20 nm to 50 nm. In some embodiments, the particle diameter of at least 70%, such as 75%, 80%, 85%, 90%, or 95%, of the silicon-oxygen-carbon composite particles is 20 nm to 46 nm. When the particle diameter of the silicon-oxygen-carbon composite particles is overly small, the electrical conductivity of the negative active material is low, the gravimetric capacity of the material decreases, the cycle capacity retention rate of the electrochemical device decreases, and the expansion rate of the electrochemical device increases. When the particle diameter of the silicon-oxygen-carbon composite particles is overly large, the ion conductivity of the negative active material deteriorates, the utilization rate of the negative active material decreases, and therefore, the gravimetric capacity of the material decreases, the cycle capacity retention rate of the electrochemical device decreases, and the expansion rate of the electrochemical device increases.

According to some embodiments of this application, a thickness d of the silicon-oxygen-carbon layer and $D_{v50}$ of the silicon-oxygen particles satisfy: $0.0015 \leq d/D_{v50} \leq 0.8$. In some embodiments, the $d/D_{v50}$ ratio is 0.002, 0.005, 0.01, 0.015, 0.02, 0.03, 0.05, 0.09, 0.15, 0.3, 0.4, 0.45, 0.55, 0.7, or a value falling within a range formed by any two thereof. In some embodiments, $0.002 \leq d/D_{v50} \leq 0.5$. In some embodiments of this application, $D_{v50}$ of the silicon-oxygen particles is 2.5 $\mu m$ to 10 $\mu m$. In some embodiments, $D_{v50}$ is 2.5 $\mu m$, 3.0 $\mu m$, 4.0 $\mu m$, 4.5 $\mu m$, 5.5 $\mu m$, 6.0 $\mu m$, 7.0 $\mu m$, 8.0 $\mu m$, or a value falling within a range formed by any two thereof. In this application, $D_{v50}$ is a particle diameter value at which the cumulative volume percent reaches 50% in a volume-based particle size distribution curve of the particles. When the particle diameter of the silicon-oxygen particles is overly small, the silicon-oxygen particles are bonded to each other. The stress of the negative active material is not distributed uniformly during lithium intercalation, thereby decreasing the capacity retention rate and increasing the expansion rate of the electrochemical device. When the particle diameter of the silicon-oxygen particles is overly large, the thickness of the silicon-oxygen-carbon layer is relatively small, thereby increasing the stress on the silicon-oxygen-carbon layer. The silicon-oxygen-carbon layer is unable to effectively protect the interface, thereby decreasing the capacity retention rate and increasing the expansion rate of the electrochemical device.

According to some embodiments of this application, the silicon-oxygen particles are $SiO_x$, where x satisfies: $0.5 \leq x \leq 1.5$. In some embodiments, the silicon-oxygen particles include at least two of Si, SiO, or $SiO_2$. In some embodiments, the silicon-oxygen particles are SiO.

According to some embodiments of this application, based on a mass of the negative active material, a mass percent of carbon is a%, satisfying: $0.9 \leq a \leq 11$. In some embodiments, a is 0.95, 1.5, 2, 3, 4, 5, 6, 7, 8, 9, 10.5, or a value falling within a range formed by any two thereof. In some embodiments, $1 \leq a \leq 10$.

According to some embodiments of this application, based on a mass of the negative active material, a mass percent of silicon is b%, satisfying: $50 \leq b \leq 63$. In some embodiments, b is 52, 54, 57, 59, 62, or a value falling within a range formed by any two thereof. In some embodiments, $55 \leq b \leq 63$.

According to some embodiments of this application, based on a mass of the negative active material, a mass percent of carbon is a%, and a mass percent of silicon is b%, satisfying: $0.015 \leq a/b \leq 0.25$. In some embodiments, the a/b ratio is 0.018, 0.025, 0.035, 0.05, 0.07, 0.10, 0.13, 0.15, 0.17, 0.19, 0.23, or a value falling within a range formed by any two thereof. In some embodiments, $0.015 \leq a/b \leq 0.20$. In some embodiments, $0.015 \leq a/b \leq 0.10$.

According to some embodiments of this application, in an X-ray diffraction pattern of the negative active material, a maximum intensity value corresponding to a $2\theta$ diffraction angle range of 28.0° to 29.0° is $I_2$, and a maximum intensity value corresponding to a diffraction angle range of 20.5° to 21.5° is $I_1$, satisfying $0 < I_2/I_1 \leq 1$. According to some embodiments of this application, a specific surface area of the negative active material is 1 $m^2/g$ to 50 $m^2/g$. In some embodiments, the specific surface area of the negative active material is 1 $m^2/g$, 10 $m^2/g$, 20 $m^2/g$, 30 $m^2/g$, 40 $m^2/g$, 45 $m^2/g$, or a value falling within a range formed by any two thereof. According to some embodiments of this application, a powder conductivity of the negative active material is 2.0 S/cm to 30 S/cm. In some embodiments, the powder conductivity of the negative active material is 3.0 S/cm, 5.0 S/cm, 7.0 S/cm, 10 S/cm, 15 S/cm, 20 S/cm, 25 S/cm, or a value falling within a range formed by any two thereof.

According to some embodiments of this application, the negative active material further includes graphite. The added graphite can increase the gravimetric capacity of the negative active material. In some embodiments, the graphite includes at least one of natural graphite, artificial graphite, or mesocarbon microbeads.

## II. Method for preparing a negative active material

A method for preparing a negative active material of this application includes: heat-treating a solution containing an oxide of silicon, a silicon source, a carbon source, and an organic solvent to obtain a heat-treated powder; and calcining the heat-treated powder, where the heat treatment is performed at a temperature of 80 °C to 120 °C; and/or the calcination includes: calcining at a temperature of 600 °C to 1200 °C. In some embodiments, the calcination includes: calcining by increasing the temperature to 600 °C to 1200 °C at a heating rate of 3 °C/min to 10 °C/min. In some embodiments, the calcination includes: calcining by increasing the temperature to 800 °C to 1200 °C at a heating rate of 3 °C/min to 10 °C/min.

According to some embodiments of this application, the heat treatment is performed at a temperature of 80 °C to 120 °C. When the temperature of the heat treatment is overly high, the crosslinking temperature of the oxide of silicon, the silicon source, and the carbon source is too high, and the uniformity of the shrinkage stress during the crosslinking deteriorates, thereby increasing defects of the material. Consequently, the gravimetric capacity of the resulting negative active material is decreased, and the silicon-oxygen-carbon layer is thinned. In some embodiments, the heat treatment is performed at a temperature of 85 °C, 90 °C, 95 °C, 105 °C, 110 °C, 115 °C, or a value falling within a range formed by any two thereof.

According to some embodiments of this application, the calcination is performed at a temperature of 600 °C to 1200 °C. In some embodiments, the calcination is performed at a temperature of 800 °C to 1200 °C. When the calcination temperature is overly high, the grains of the material become larger, and even crystallization peaks appear, thereby deteriorating ion conductivity of the negative active material, decreasing the gravimetric capacity, and in turn, impairing the cycle capacity retention rate and exacerbating the expansion rate of the electrochemical device. In some embodiments, the calcination is performed at a temperature of 650 °C, 700 °C, 750 °C, 850 °C, 950 °C, 1050 °C, 1150 °C, or a value falling within a range formed by any two thereof.

According to some embodiments of this application, the heating rate is 3 °C/min to 10 °C/min. When the heating rate is lower, the formed crystal nuclei become smaller, thereby deteriorating the electrical conductivity of the negative active material, and in turn, decreasing the gravimetric capacity of the negative active material, decreasing the cycle capacity retention rate of the electrochemical device, and increasing the expansion rate. When the heating rate is higher, the crystal grains become larger, thereby deteriorating the ion conductivity of the negative active material, decreasing the utilization rate of the negative active material, and reducing the cycle capacity retention rate and increasing the expansion rate of the electrochemical device. In some embodiments, the heating rate is 4 °C/min, 6 °C/min, 7 °C/min, 8 °C/min, 9 °C/min, or a value falling within a range formed by any two thereof.

According to some embodiments of this application, the oxide of silicon is $SiO_x$, where x satisfies: $0.5 \leq x \leq 1.5$. In some embodiments, the oxide of silicon includes at least two of Si, SiO, or $SiO_2$. In some embodiments, the oxide of silicon is SiO.

According to some embodiments of this application, the silicon source includes at least one of tetramethyl-tetravinyl-cyclotetrasiloxane, or polymethylhydrosiloxane. According to some embodiments of this application, the carbon source includes at least one of tetramethyl-tetravinyl-cyclotetrasiloxane, or polymethylhydrosiloxane. According to some embodiments of this application, the organic solvent includes at least one of methanol, ethanol, n-hexane, N,N-dimethylformamide, pyrrolidone, acetone, toluene, isopropanol, or n-propanol.

## III. Electrochemical device

The electrochemical device according to this application includes a negative electrode. The negative electrode includes the negative active material according to the first aspect of this application. According to some embodiments of this application, a film resistance of the negative electrode is 0.2 Ω to 1 Ω.

According to some embodiments of this application, the negative electrode includes a negative current collector and a negative active material layer disposed on a surface of the negative current collector. The negative active material layer includes the negative active material according to the first aspect. In some embodiments, the negative active material layer further includes a binder. The binder may include various binder polymers. In some embodiments, the binder includes at least one of a polyvinylidene fluoride, a vinylidene fluoride-hexafluoropropylene copolymer, a polyamide, a polyacrylonitrile, a polyacrylic ester, a polyacrylic acid, a sodium polyacrylate, a sodium carboxymethyl cellulose, a polyvinylpyrrolidone, a polyvinyl ether, a poly methyl methacrylate, a polytetrafluoroethylene, a polyhexafluoropropylene, or styrene butadiene rubber. In some embodiments, the negative active material layer further includes a conductive material to improve electrode conductivity. Any electrically conductive material may be used as the conductive material as long as the material does not cause chemical changes. In some embodiments, the conductive material includes at least one of conductive carbon black, acetylene black, carbon nanotubes, Ketjen black, conductive graphite, or graphene.

According to some embodiments of this application, the negative current collector may be a copper foil, a nickel foil, a stainless steel foil, a titanium foil, foamed nickel, foamed copper, a conductive-metal-clad polymer substrate, or any combination thereof.

According to some embodiments of this application, the electrochemical device further includes a positive electrode. The positive electrode includes a current collector and a positive active material layer located on the current collector.

According to some embodiments of this application, the positive active material includes, but is not limited to, lithium cobalt oxide ($LiCoO_2$), a lithium nickel-cobalt-manganese (NCM) ternary material, lithium ferrous phosphate ($LiFePO_4$), or lithium manganese oxide ($LiMn_2O_4$).

According to some embodiments of this application, the positive active material layer further includes a conductive agent and a binder. In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylated (acrylate-esterified) styrene-butadiene rubber, epoxy resin, nylon, or the like. In some embodiments, the conductive agent includes, but is not limited to, a carbon-based material, a metal-based material, a conductive polymer, or a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fibers, copper, nickel, aluminum, or silver. In some embodiments, the conductive polymer is a polyphenylene derivative.

According to some embodiments of this application, the positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

The positive electrode according to this application may be prepared by a method well-known in the art. A typical method for preparing a positive electrode includes: mixing a positive electrode material, optionally a conductive agent (for example, carbon black and other carbonaceous materials, and metal particles), a binder (such as SBR), other optional additives (such as PTC thermistor material), and other materials, dispersing the mixture in a solvent (such as deionized water), stirring well to form a slurry, and then coating a positive current collector with the slurry evenly, and oven-drying the slurry to obtain a positive electrode containing a positive electrode film.

According to some embodiments of this application, the electrochemical device further includes an electrolyte solution or a solid-state electrolyte.

According to some embodiments of this application, the electrolyte solution applicable to embodiments of this application may be an electrolyte solution known in the prior art.

In some embodiments, the electrolyte solution includes an organic solvent, a lithium salt, and an additive. The organic solvent of the electrolyte solution according to this application may be any organic solvent known in the prior art suitable for use as a solvent of the electrolyte solution. An electrolyte used in the electrolyte solution according to this application is not limited, and may be any electrolyte known in the prior art. The additive in the electrolyte solution according to this application may be any additive known in the prior art suitable for use as an additive in the electrolyte solution. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxane (DOL) or ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate ($LiPF_6$), lithium tetrafluoroborate ($LiBF_4$), lithium difluorophosphate ($LiPO_zF_z$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate) borate $LiB(C_2O_4)_2$ (LiBOB), or lithium difluoro(oxalate)borate $LiBF_2(C_2O_4)$ (LiDFOB).

According to some embodiments of this application, the solid-state electrolyte includes at least one of $Li_{2+x}Al_{2+x}Si_{1-x}S_6$ ($0 \leq x < 1$), $Li_3YC_{16}$, $Li_3YBr_6$, $Li_3OCl$, LiPON, $Li_{0.5}La_{0.5}TiO_3$, $Li_{1+x}Al_xTi_{2-x}(PO_4)_3$, $Li7La_3Zr_2O_{12}$, $Li_{10}GeP_2S_{12}$ (LGPS), $Li_{9.54}Si_{1.74}P_{1.44}S_{11.7}Cl_{0.3}$, $Li_{3.25}Ge_{0.25}P_{0.75}S_4$, $Li_{11}AlP_2S_{12}$, or $Li_7P_3S_{11}$.

According to some embodiments of this application, a separator is disposed between a positive electrode and a negative electrode of the electrochemical device to prevent a short circuit. The material and the shape of the separator applicable to an embodiment of this application are not particularly limited, and may be based on any technology disclosed in the prior art. In some embodiments, the separator includes a polymer or an inorganic compound or the like formed from a material that is stable to the electrolyte solution disclosed in this application. For example, the separator may include a substrate layer and a surface treatment layer. The substrate layer is a non-woven fabric, film or composite film, each being of a porous structure. The material of the substrate layer includes at least one of polyethylene, polypropylene, polyethylene terephthalate, or polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film. The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene poly(fluoride-co-hexafluoropropylene), polyamide, polyacrylonitrile, polyacrylate, polyacrylic acid, polyacrylic acid sodium salt, polyvinylpyrrolidone, polyvinyl ether, polymethyl methacrylate, polytetrafluoroethylene, or polyhexafluoropropylene. The polymer layer includes a polymer. The material of the polymer includes at least one of polyamide, polyacrylonitrile, an acrylate polymer, polyacrylic acid, polyacrylic acid sodium salt, polyvinylpyrrolidone, polyvinyl ether, polyvinylidene fluoride, or poly(vinylidene fluoride-co-hexafluoropropylene).

According to some embodiments of this application, the electrochemical device of this application includes, but is not limited to: any type of primary battery, secondary battery, fuel battery, solar battery, or capacitor. In some embodiments, the electrochemical device is a lithium secondary battery. In some embodiments, the lithium secondary battery includes, but is not limited to, a lithium metal secondary battery, a lithium-ion secondary battery, a lithium polymer secondary battery, or a lithium-ion polymer secondary battery.

## IV Electronic device

The electronic device of this application may be any device that uses the electrochemical device disclosed in the third aspect of this application.

In some embodiments, the electronic device includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

**Embodiments and comparative embodiments**

**I. Preparing a SiO$_x$@silicon-oxygen-carbon material**

Step 1: Adding organosilicone (such as polysiloxane) into an organic solvent at a specified mixing ratio, and stirring for 0.5 to 4 hours. immersing a SiO$_x$ ($0.5 \leq x \leq 1.5$) material completely in the organosilicone solution, and then heating the solution to 80 °C and stirring the solution to remove the solvent, and then putting the resulting product into an 80 °C to 120 °C oven and drying the product for 24 hours.

Step 2: Pyrolyzing the dry product obtained in step 1 in a tube furnace by using N$_2$ or Ar as a protective atmosphere, where the steps of heating are: increasing the temperature to 800 °C to 1200 °C at a speed of 3 °C/min to 10 °C/min, keeping the temperature for 3 hours, and then pyrolyzing the product to obtain a SiO$_x$@silicon-oxygen-carbon material.

**II. Preparing a lithium-ion battery**

Mixing the SiO$_x$@silicon-oxygen-carbon material with graphite at a mass ratio of 4: 6 to obtain a mixed powder. Adding the mixed powder, acetylene black as a conductive agent, and PAA at a mass ratio of 95: 1.2: 3.8 into a deionized water solvent system, stirring well to form a slurry, and then coating a copper foil with the slurry, and drying and cold-pressing the foil to obtain a negative electrode plate. Adding LiCoO$_2$, conductive carbon black, and polyvinylidene difluoride (PVDF) at a mass ratio of 95: 2.5: 2.5 into an N-methyl-pyrrolidone solvent system, and stirring well to obtain a positive electrode slurry. Coating a positive current collector aluminum foil with the prepared positive electrode slurry, and drying and cold-pressing the foil to obtain a positive electrode plate. Using a PE porous polymer film as a separator. Stacking the positive electrode plate, the separator, and the negative electrode plate sequentially, placing the separator between the positive electrode and the negative electrode to serve a function of separation, and winding them to obtain an electrode assembly. Putting the electrode assembly into an outer package, injecting the prepared electrolyte solution (the electrolyte solution is prepared by mixing EC and DEC at a mass ratio of 4: 6 and adding a lithium salt LiPF$_6$ at a concentration of 1.2 mol/L) into the package, and sealing the package. Performing steps such as chemical formation, degassing, and edge trimming to obtain a lithium-ion battery.

**Embodiment 1**

Step 1: Formulating a polysiloxane precursor solution by mixing tetramethyl-tetravinyl-cyclotetrasiloxane, polymethylhydrosiloxane, and ethanol at a ratio of 50 g: 50 g: 400 g, and stirring for 30 minutes to obtain a homogeneous precursor solution.

Step 2: Adding 630 grams of SiO (D$_{v50}$: 5.6 μm) into the precursor solution obtained in step 1, stirring for 30 minutes, and then heating the solution at 80 °C to obtain a dry powder.

Step 3: Calcining the dry powder obtained in step 2, increasing the temperature to 800 °C at a heating rate of 5 °C/min, and keeping the temperature for 3 hours to obtain a SiO$_x$@silicon-oxygen-carbon material.

Step 4: Preparing a lithium-ion battery with reference to "II. Preparing a lithium-ion battery" above.

In the SiO$_x$@silicon-oxygen-carbon material, the thickness of the silicon-oxygen-carbon layer is 100 nm. Based on a mass of the SiO$_x$@silicon-oxygen-carbon material, the mass percent of carbon is 1.77%, the mass percent of silicon is 60.0%, and the mass ratio between carbon and silicon is 0.0295. The ratio of the thickness of the silicon-oxygen-carbon coating layer to D$_{v50}$ of SiO is 0.017.

The XPS binding energy peak positions of the Si2$_p$ in the SiO$_x$@silicon-oxygen-carbon material include: 101.4±0.3 eV, 102.2±0.3 eV, 103.1±0.3 eV, and 104.40±0.3 eV.

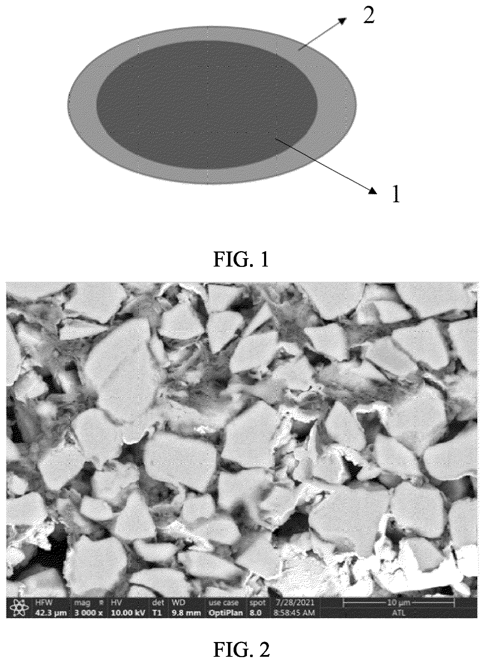

As shown in FIG. 2, in the SEM image of the SiO$_x$@silicon-oxygen-carbon material, crosslinking occurs at the interface between the silicon-oxygen-carbon compound and the SiO$_x$, and a dark silicon-oxygen-carbon layer is exhibited at the interface.

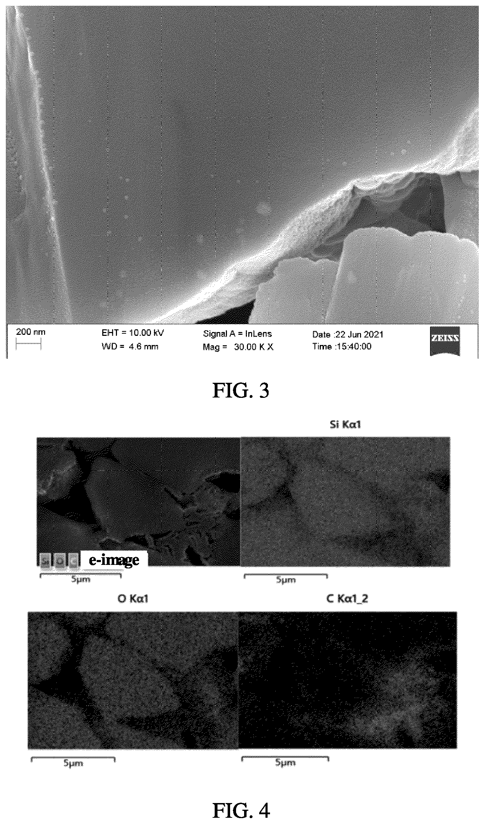

As shown in FIG. 3, on the surface of the SiO$_x$@silicon-oxygen-carbon material particles, silicon-oxygen-carbon composite particles with a particle diameter of 28 nm to 46 nm are visible.

As shown in FIG. 4, in an EDS spectrum of the SiO$_x$@silicon-oxygen-carbon material, the silicon and oxygen elements can be seen inside the particle, and the carbon element can be seen at the edge of the particle.

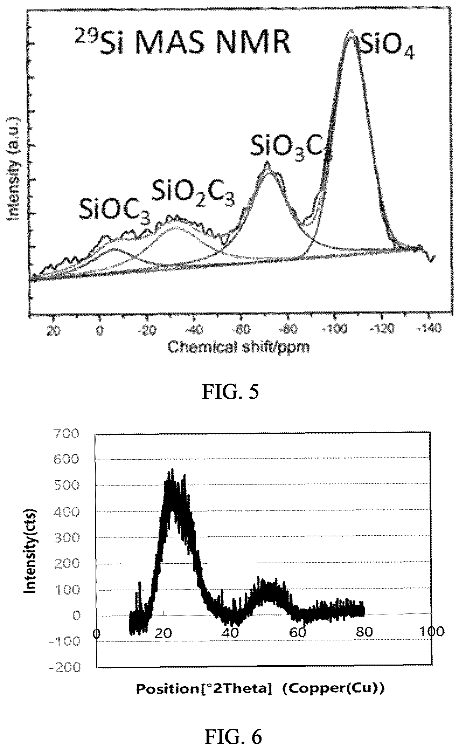

As shown in FIG. 5, the chemical shifts of silicon in the solid nuclear magnetic resonance (sNMR) spectroscopy of the SiO$_x$@silicon-oxygen-carbon material include -5 ppm, -35 ppm, -75 ppm, and -110 ppm.

The gravimetric capacity of the SiO$_x$@silicon-oxygen-carbon material powder is 1430 mAh/g. At the end of the 500th cycle of the lithium-ion battery, the capacity retention rate is 90.1%, and the expansion rate is 10%.

**Embodiments 2 to 4**

For the processes of preparing the SiO$_x$@silicon-oxygen-carbon material and the lithium-ion battery, reference may be made to Embodiment 1. The difference lies in the mass of SiO added in step 2 in Embodiments 2 to 4, as detailed in Table 1.

**Embodiments 5 to 12**

For the processes of preparing the SiO$_x$@silicon-oxygen-carbon material and the lithium-ion battery, reference may be made to Embodiment 1. The difference lies in the heating temperature in steps 2 and 3 as well as the calcination temperature and the heating rate during the calcination in Embodiments 5 to 12, as detailed in Table 2.

**Embodiments 13 to 14**

For the processes of preparing the SiO$_x$@silicon-oxygen-carbon material and the lithium-ion battery, reference may be made to Embodiment 1. The difference lies in the D$_{vso}$ of SiO in Embodiments 13 to 14, as detailed in Table 3.

**Comparative Embodiment 1**

Step 1: Calcining 630 grams of SiO (D$_{v50}$: 5.6 μm) powder, increasing the temperature to 800 °C at a heating rate of 5 °C/min, and keeping the temperature for 3 hours to obtain a SiO$_x$ material.
Step 2: Preparing a lithium-ion battery with reference to "II. Preparing a lithium-ion battery" above.
The gravimetric capacity of the SiO$_x$ material powder is 1527 mAh/g. At the end of the 500th cycle of the lithium-ion battery, the capacity retention rate is 65.2%, and the expansion rate is 19%.

**Comparative Embodiment 2**

Step 1: Formulating a polysiloxane precursor solution by mixing tetramethyl-tetravinyl-cyclotetrasiloxane, polymethylhydrosiloxane, and ethanol at a ratio of 50 g: 50 g: 400 g, and stirring for 30 minutes to obtain a homogeneous precursor solution.
Step 2: Adding 630 grams of SiO (D$_{v50}$: 5.6 μm) into the precursor solution obtained in step 1, stirring for 30 minutes, and then heating the solution at 80 °C to obtain a dry powder.
Step 3: Calcining the dry powder obtained in step 2, increasing the temperature to 1400 °C at a heating rate of 5 °C/min, and keeping the temperature for 3 hours to obtain a SiO$_x$@silicon-oxygen-carbon material.
Step 4: Preparing a lithium-ion battery with reference to "II. Preparing a lithium-ion battery" above.
In the SiO$_x$@silicon-oxygen-carbon material, the thickness of the silicon-oxygen-carbon layer is 110 nm. Based on a mass of the SiO$_x$@silicon-oxygen-carbon material, the mass percent of carbon is 1.23%, the mass percent of silicon is 52.1%, and the mass ratio between carbon and silicon is 0.0236. The ratio of the thickness of the silicon-oxygen-carbon layer to D$_{v50}$ of SiO$_x$ is 0.01964.
The gravimetric capacity of the SiO$_x$@silicon-oxygen-carbon material powder is 231 mAh/g. At the end of the 500th cycle of the lithium-ion battery, the capacity retention rate is 65.2%, and the expansion rate is 18%. Because the calcination temperature reaches 1400 °C, SiC is generated during synthesis of the SiOx@silicon-oxygen-carbon material. Therefore, the electrochemical activity of the material is greatly reduced, thereby leading to a significant decrease in the gravimetric capacity of the powder, and in turn, leading to drastic deterioration of the cycle performance and expansion resistance of the lithium-ion battery.

**Comparative Embodiment 3**

1. Formulating a polysiloxane precursor solution by mixing tetramethyl-tetravinyl-cyclotetrasiloxane, polymethylhydrosiloxane, and ethanol at a ratio of 50 g: 50 g: 400 g, and stirring for 30 minutes to obtain a homogeneous precursor solution.
2. Adding 630 grams of SiO (D$_{v50}$: 5.6 μm) into the precursor solution obtained in step 1, stirring for 30 minutes, and then heating the solution at 200 °C to obtain a dry powder.
3. Calcining the dry powder obtained in step 2, increasing the temperature to 1400 °C at a heating rate of 5 °C/min, and keeping the temperature for 3 hours to obtain a SiO$_x$@silicon-oxygen-carbon material.
4. Preparing a lithium-ion battery with reference to "II. Preparing a lithium-ion battery" above.
In the SiO$_x$@silicon-oxygen-carbon material, the silicon-oxygen-carbon layer is absent. The gravimetric capacity of the SiO$_x$@silicon-oxygen-carbon material powder is 1521 mAh/g. At the end of the 500th cycle of the lithium-ion battery, the capacity retention rate is 65.2%, and the expansion rate is 18%. No silicon-oxygen-carbon layer exists because the silicon-oxygen-carbon precursor is volatilized due to an excessive heating temperature.

**Test methods**

**SEM test:**

(1) Preparing an ion beam cross-section polishing (CP, Cross Section Polisher) specimen: Fixing negative active material powder onto a specimen holder, and treating the negative active material powder by performing argon ion beam cross-section polishing (the accelerating voltage is 8 KV, and each specimen is treated for 4 hours), so as to obtain a negative active material CP specimen.

(2) Capturing a SEM image of the negative active material CP specimen after the negative active material CP specimen is prepared. Specifically, capturing the SEM image by using a scanning electron microscope (Philips XL-30 field emission scanning electron microscope) at 10 kV and 10 mA, and analyzing the SEM image to obtain the thickness of a silicon-oxygen-carbon coating layer on the surface of the active material and the particle diameter of the fine particles (that is, silicon-oxygen-carbon composite particles) on the surface.

**$^{29}$Si MAS NMR test:** Testing the specimen by using an AVANCE III 400 WB wide-cavity solid-state nuclear magnetic resonance instrument at a rotation rate of 8 kHz.

**Testing the carbon content:** Heating a specimen of the material in a highfrequency furnace to a high temperature in the presence of rich oxygen to combust the specimen so that the carbon and sulfur are oxidized into a carbon dioxide gas and a sulfur dioxide gas respectively. Treating the gases, and directing the gases into respective absorption tanks to absorb corresponding infrared radiation, and then using a detector to convert the absorbed infrared radiation into corresponding signals. Converting the signals, which are sampled and linearly corrected by a computer, into a value proportional to the concentration of the carbon dioxide or sulfur dioxide. Summing all such values obtained in the entire analysis process. Upon completion of the analysis, dividing the sum by the weight value through the computer, and then multiplying by a correction coefficient, and deducting blank values to obtain the mass percent of carbon or sulfur in the specimen. Testing the specimen by using a highfrequency infrared carbon-sulfur analyzer (HCS-140, manufactured by Shanghai Dekai Instrument Co., Ltd.).

**Testing the silicon content:** Weighing out 0.5 gram of active material powder, mixing the powder with 10 mL of $HNO_3$ solution, dissolving the trace elements in the powder into the solution by means of microwave digestion, and introducing the digested solution into an inductively coupled plasma optical emission spectrometer (ICP-OES) light source, so that the ICP-OES instrument detects the content of each different substance based on the characteristic radiation energy emitted during radiative transition when outer electrons of gaseous atoms in the specimen material return to a ground state from an excited state after the gaseous atoms are excited.

**Testing the particle diameter:** Adding 0.02 gram of powder specimen into a 50 ml clean beaker, adding approximately 20 ml of deionized water, and then adding a few drops of 1% surfactant to fully disperse the powder in the water. Sonicating the solution in a 120 W ultrasonic cleaner for 5 minutes, and testing the particle size distribution by using MasterSizer 2000.

**X-ray diffraction (XRD) test:** Using an X-ray powder diffractometer (XRD) (model: Bruker D8 ADVANCE) to test the negative active material under the following conditions: the target material is Cu Ka, the voltage/current is 40 KV/40 mA, the scanning angle range is 5° to 80°, the scanning step length is 0.00836°, and the time spent on each step length is 0.3 s.

**Testing the gravimetric capacity of the negative active material:** Adding $LiPF_6$ into a solvent in a dry argon atmosphere, where the solvent is a mixture of propylene carbonate (PC), ethylene carbonate (EC), and diethyl carbonate (DEC) (at a weight ratio of approximately 1:1:1); mixing the solution homogeneously, where the content of $LiPF_6$ is approximately 12%; and then adding approximately 7.5 wt% fluoroethylene carbonate (FEC), and mixing the solution homogeneously to obtain an electrolyte solution.

Adding the negative active material, conductive carbon black, and a modified polyacrylic acid (PAA) binder into deionized water at a weight ratio of approximately 80:10:10; stirring the mixture to form a slurry; applying the slurry with a squeegee to form a coating that is approximately 100 $\mu$m thick; drying the material in a vacuum drying oven at approximately 85 °C for approximately 12 hours; using a stamping machine in a dry environment to cut the material into discs whose diameter is approximately 1 cm; using a metal lithium sheet as a counter electrode in a glovebox; selecting a Ceglard composite film as a separator; and adding electrolyte solution to assemble a coin battery; and performing a charge-discharge test on the battery by using a LAND series battery test system.

Specifically, taking assembled button batteries as specimens in groups, and ensuring that the open-circuit voltage (OCV) is normal, where each group includes at least 4 parallel specimens. Setting the voltage window of the button battery to a value range of 0 V to 2.5 V. Leaving the battery to stand at 25 °C for 1 hour, and then discharging the battery in three stages at a small current of 0.05 C, 50 $\mu$A, 20 $\mu$A, respectively, to form a Solid Electrolyte Interface (SEI) film, and recording the lithiation capacity. Subsequently, charging the battery at a 0.1C current rate until the voltage reaches 2.5 V, and recording the delithiation capacity, where the delithiation capacity is the gravimetric capacity of the negative active material.

**Cycle test:** Charging the battery at a 0.5 C constant current under a 25 °C temperature until the voltage reaches 4.45 V, charging the battery at a constant voltage until the current reaches 0.025 C, leaving the battery to stand for 5 minutes, and then discharging the battery at a current of 0.5 C until the voltage reaches 3.0 V. Performing a cycle test in which the battery is charged at 0.5 C and discharged at 0.5 C by using the capacity obtained in this step as an initial capacity, comparing the capacity obtained in each step with the initial capacity to obtain a plurality of ratios, and obtaining a capacity fading curve by using the ratios, $n^{th}$-cycle capacity retention rate = $n^{th}$-cycle discharge capacity/initial capacity $\times$ 100%.

**Testing a full-charge expansion rate of the lithium-ion battery:** Charging the battery at a 0.5 C constant current under a 25 °C temperature until the voltage reaches 4.45 V, charging the battery at a constant voltage until the current reaches 0.025 C, leaving the battery to stand for 5 minutes, and then discharging the battery at a current of 0.5 C until the voltage reaches 3.0 V. Measuring the thickness of the lithium-ion battery in an initial half-charge state by using a spiral micrometer, denoted as $h_0$. Measuring the thickness, denoted as h, of the lithium-ion battery by use of a spiral micrometer when the lithium-ion battery is in a fully charged state at the end of the $500^{th}$ cycle, and then calculating the expansion rate of the lithium-ion battery as:

$$\text{expansion rate} = \frac{h - h_0}{h_0} \times 100\%.$$

**Test results**

Table 1 shows how the dosage of SiO affects the performance of the negative active material and the lithium-ion battery containing the negative active material.

In a process of preparing the negative active materials of Comparative Embodiment 1 and Embodiments 1 to 4, the heat-treatment temperature is 80 °C, the heating rate during calcination is 5 °C/min, the temperature is 800 °C, the calcination duration is 3 h, and the $D_{v50}$ of SiO is 5.6 $\mu$m.

**Table 1**

| Embodiment/comparative embodiment | Preparation parameter | SiO$_x$@silicon-oxygen-carbon material | | | | | | | | | Lithium-ion battery | |
|---|---|---|---|---|---|---|---|---|---|---|---|---|
| | Dosage of SiO (g) | Thickness d of Si-O-C layer (nm) | d/D$_{v50}$ | Mass percent of carbon (%) | Mass percent of silicon (%) | Mass ratio between Si and C | Gravimetric capacity (mAh/g) | FWHM at-5 ppm in sNMR test (ppm) | Particle diameter of Si-O-C composite particles (nm) | 500th-cycle capacity retention rate (%) | 500th-cycle expansion rate (%) |
| Embodiment 1 | 630 | 100 | 0.017 | 1.77 | 60.00 | 0.0295 | 1430 | 20 | 28 to 46 | 90.10 | 10.0 |
| Embodiment 2 | 1260 | 50 | 0.009 | 1.23 | 61.50 | 0.020 | 1490 | 25 | 20 to 40 | 87.90 | 12.0 |
| Embodiment 3 | 2520 | 10 | 0.0018 | 0.92 | 63.00 | 0.015 | 1530 | 25 | 18 to 30 | 84.20 | 14.0 |
| Embodiment 4 | 63 | 2000 | 0.357 | 10.82 | 50.32 | 0.215 | 1042 | 20 | 28 to 46 | 91.30 | 9.8 |
| Comparative Embodiment 1 | 630 | - | - | - | 60.00 | - | 1527 | - | - | 65.20 | 19.0 |

Note: The particle diameter of the Si-O-C composite particles in the table is a particle diameter corresponding to at least 70% of the silicon-oxygen-carbon composite particles.

As can be seen from the data in Table 1, when the dosage of SiO is higher, the relative content of silicon-oxygen-carbon is lower, the thickness of the corresponding silicon-oxygen-carbon layer is smaller, the gravimetric capacity of the $SiO_x$@silicon-oxygen-carbon material rises slightly, and the silicon-oxygen-carbon nanoparticles are smaller in size. However, when the thickness of the silicon-oxygen-carbon layer is relatively small, the silicon-oxygen-carbon layer is unable to effectively protect the interface, thereby decreasing the capacity retention rate and increasing the expansion rate of the electrochemical device. When the dosage of SiO is lower, the relative content of silicon-oxygen-carbon is higher, the thickness of the corresponding silicon-oxygen-carbon layer is larger, and the gravimetric capacity of the $SiO_x$@silicon-oxygen-carbon material decreases. When the thickness of the silicon-oxygen-carbon coating layer is larger, although the capacity retention rate is higher and the expansion rate of the lithium-ion battery is lower, more active lithium storage sites are lost, thereby resulting in the loss of the energy density of the lithium-ion battery.

Table 2 shows how the heating temperature in steps 2 and 3 as well as the calcination temperature and the heating rate during the calcination affect the performance of the resulting negative active material and the lithium-ion battery containing the negative active material.

In Embodiments 5 to 12 and Comparative Embodiments 2 to 3, the dosage of SiO is 630 g, and the $D_{v50}$ of SiO is 5.6 $\mu$m. The full-width-at-half-maximum (FWHM) at -5 ppm in a solid nuclear magnetic resonance (sNMR) test of the $SiO_x$@carbon-oxygen-carbon material in Embodiments 5 to 12 is 20 ppm, and the FWHM at -5 ppm in an sNMR test of the $SiO_x$@carbon-oxygen-carbon material in Comparative Embodiment 2 is 25 ppm.

**Table 2**

| Embodiment or comparative embodiment | Preparation parameter | | | SiO$_x$@silicon-oxygen-carbon material | | | | | | | Lithium-ion battery | |
|---|---|---|---|---|---|---|---|---|---|---|---|---|
| | Heat-treatment temperature (°C) | Heating rate (°C/min) | Calcination temperature (°C) | Thickness d of Si-O-C layer (nm) | d/D$_{v50}$ | Mass percent of carbon (%) | Mass percent of silicon (%) | Mass ratio between Si and C | Gravimetric capacity (mAh/g) | Particle diameter of Si-O-C composite particles (nm) | 500$^{th}$-cycle capacity retention rate (%) | 500$^{th}$-cycle expansion rate (%) |
| Embodiment 1 | 80 | 5 | 800 | 100 | 0.017 | 1.77 | 60.00 | 0.0295 | 1430 | 28 to 46 | 90.10 | 10.0 |
| Embodiment 5 | 100 | 5 | 800 | 83 | 0.0148 | 1.62 | 61.00 | 0.027 | 1399 | 28 to 42 | 86.0 | 11.8 |
| Embodiment 6 | 120 | | | 74 | 0.0132 | 1.43 | 60.50 | 0.024 | 1384 | 24 to 37 | 84.30 | 11.3 |
| Embodiment 7 | 80 | 3 | 800 | 102 | 0.0182 | 1.82 | 60.03 | 0.030 | 1252 | 2 to 15 | 88.70 | 11.5 |
| Embodiment 8 | | 10 | | 98 | 0.0175 | 1.82 | 60.02 | 0.030 | 824 | 32 to 50 | 84.20 | 11.0 |
| Embodiment 9 | 80 | 5 | 900 | 105 | 0.0188 | 1.81 | 60.01 | 0.030 | 651 | 42 to 52 | 83.30 | 11.4 |
| Embodiment 10 | | | 1000 | 106 | 0.0189 | 1.75 | 60.05 | 0.029 | 721 | 44 to 56 | 88.70 | 11.8 |
| Embodiment 11 | | | 1100 | 107 | 0.0191 | 1.76 | 60.03 | 0.029 | 542 | 47 to 59 | 88.90 | 11.0 |
| Embodiment 12 | | | 1200 | 108 | 0.0193 | 1.82 | 60.03 | 0.030 | 421 | 52 to 63 | 83.60 | 11.2 |
| Comparative Embodiment 2 | 80 | 5 | 1400 | 110 | 0.0197 | 1.23 | 52.10 | 0.024 | 231 | 1 to 50 | 64.80 | 18.3 |
| Comparative Embodiment 3 | 200 | 5 | 800 | - | - | - | 60.00 | - | 1521 | - | 63.50 | 18.2 |
| Note: The particle diameter of the Si-O-C composite particles in the table is a particle diameter corresponding to at least 70% of the silicon-oxygen-carbon composite particles. | | | | | | | | | | | | |

As can be seen from the data in Table 2, when the temperature of the heat treatment is overly high, the crosslinking temperature of the oxide of silicon, the silicon source, and the carbon source is too high, and the uniformity of the shrinkage stress of the material during the crosslinking deteriorates, thereby increasing defects of the $SiO_x$@silicon-oxygen-carbon material, and in turn, decreasing the gravimetric capacity of the material. At the same time, the silicon-oxygen-carbon layer becomes thinner, the carbon content decreases accordingly, and the silicon-oxygen-carbon nanoparticles are smaller in size, thereby decreasing the capacity retention rate and increasing the expansion rate of the lithium-ion battery.

When the heating rate is lower, the formed crystal nuclei become smaller, thereby deteriorating the electrical conductivity of the $SiO_x$@silicon-oxygen-carbon material, and in turn, decreasing the gravimetric capacity of the material, and decreasing the cycle capacity retention rate and increasing the expansion rate of the lithium-ion battery. When the heating rate is overly higher, the crystal grains become larger, thereby deteriorating the ion conductivity of the $SiO_x$@silicon-oxygen-carbon material, the utilization rate of the active material is reduced, thereby decreasing the gravimetric capacity of the material, and decreasing the cycle capacity retention rate and increasing the expansion rate of the lithium-ion battery.

When the calcination temperature is overly high, the grains of the $SiO_x$@silicon-oxygen-carbon material become larger, and even crystallization peaks appear, thereby deteriorating ion conductivity of the material, increasing the amount of inert silicate, and in turn, decreasing the gravimetric capacity, and decreasing the cycle capacity retention rate and increasing the expansion rate of the lithium-ion battery.

Table 3 shows how the value of $D_{v50}$ of SiO affects the performance of the negative active material and the lithium-ion battery containing the negative active material.

In Embodiment 1 and Embodiments 13 to 14, the dosage of SiO is 630 g; in a process of preparing the negative active material, the heat-treatment temperature is 80 °C, the heating rate during calcination is 5 °C/min, the temperature is 800 °C, and the calcination duration is 3 h.

Table 3

| Embodiment | Preparation parameter | SiO$_x$@silicon-oxygen-carbon material | | | | | | | | Lithium-ion battery | |
|---|---|---|---|---|---|---|---|---|---|---|---|
| | D$_{v50}$ of SiO ($\mu$m) | Thickness d of Si-O-C layer (nm) | d/D$_{v50}$ | Mass percent of carbon (%) | Mass percent of silicon (%) | Mass ratio between Si and C | Gravimetric capacity (mAh/g) | FWHM at -5 ppm in sNMR test (ppm) | Particle diameter of Si-O-C composite particles (nm) | 500$^{th}$-cycle capacity retention rate (%) | 500$^{th}$-cycle expansion rate (%) |
| Embodiment 1 | 5.6 | 100 | 0.017 | 1.77 | 60.00 | 0.0295 | 1430 | 20 | 28 to 46 | 90.10 | 10.0 |
| Embodiment 13 | 2.5 | 100 | 0.04 | 1.72 | 60.32 | 0.0285 | 1462 | 20 | 27 to 45 | 88.20 | 12.3 |
| Embodiment 14 | 10 | 100 | 0.01 | 1.79 | 60.08 | 0.0298 | 1401 | 20 | 26 to 44 | 87.60 | 12.8 |
| Note: The particle diameter of the Si-O-C composite particles in the table is a particle diameter corresponding to at least 70% of the silicon-oxygen-carbon composite particles. | | | | | | | | | | | |

EP 4 428 946 A1

As can be seen from Table 3, when the particle diameter of the silicon-oxygen particles is overly small, the silicon-oxygen particles are bonded to each other. The stress of the negative active material is not distributed uniformly during lithium intercalation, thereby adversely affecting the capacity retention rate and expansion rate of the electrochemical device. When the particle diameter of the silicon-oxygen particles is overly large, the thickness of the silicon-oxygen-carbon layer is relatively small, thereby increasing the stress on the silicon-oxygen-carbon layer. The silicon-oxygen-carbon layer is unable to effectively protect the interface, thereby also adversely affecting the capacity retention rate and expansion rate of the electrochemical device.

Although some exemplary embodiments of this application have been illustrated and described, this application is not limited to the disclosed embodiments. Rather, a person of ordinary skill in the art is aware that modifications and changes may be made to the described embodiments without departing from the spirit and scope of this application set forth in the claims appended hereto.

**Claims**

1. A negative active material, comprising silicon-oxygen particles and a silicon-oxygen-carbon layer located on surfaces of the silicon-oxygen particles, wherein the silicon-oxygen-carbon layer comprises silicon-oxygen-carbon composite particles.

2. The negative active material according to claim 1, wherein the negative active material satisfies at least one of the following conditions (a) to (c):

   (a) a $^{29}$Si MAS NMR spectrum of the negative active material exhibits peaks at - 5 ppm $\pm$ 2 ppm, -35 ppm $\pm$ 2 ppm, and -75 ppm $\pm$ 2 ppm, respectively;
   (b) a $^{29}$Si MAS NMR spectrum of the negative active material exhibits a peak at - 100 ppm $\pm$ 2 ppm; or
   (c) a full-width-at-half-maximum of a peak exhibited at -5 ppm $\pm$ 2 ppm in a $^{29}$Si MAS NMR spectrum of the negative active material is 20 ppm to 25 ppm.

3. The negative active material according to claim 1, wherein the negative active material satisfies at least one of the following conditions (d) to (g):

   (d) a thickness of the silicon-oxygen-carbon layer is d, satisfying: 10 nm $\leq$ d $\leq$ 2000 nm;
   (e) the silicon-oxygen-carbon layer comprises amorphous silicon-oxygen-carbon composite particles;
   (f) a particle diameter of the silicon-oxygen-carbon composite particles is 1 nm to 60 nm; or
   (g) a particle diameter of at least 70% of the silicon-oxygen-carbon composite particles is 20 nm to 46 nm.

4. The negative active material according to claim 1, wherein a thickness d of the silicon-oxygen-carbon layer and $D_{v50}$ of the silicon-oxygen particles satisfy: 0.002 $\leq$ d/$D_{v50}$ $\leq$ 0.8.

5. The negative active material according to claim 1, wherein $D_{v50}$ of the silicon-oxygen particles is 2.5 $\mu$m to 10 $\mu$m; and/or the silicon-oxygen particles are SiO$_x$, wherein x satisfies: 0.5 $\leq$ x $\leq$ 1.5.

6. The negative active material according to claim 1, wherein the negative active material satisfies at least one of the following conditions (h) to (j):

   (h) based on a mass of the negative active material, a mass percent of carbon is a%, wherein 0.9 $\leq$ a $\leq$ 11;
   (i) based on a mass of the negative active material, a mass percent of silicon is b%, wherein 50 $\leq$ b $\leq$ 63; or
   (j) based on a mass of the negative active material, a mass percent of carbon is a%, and a mass percent of silicon is b%, wherein 0.015 $\leq$ a/b $\leq$ 0.25.

7. The negative active material according to claim 1, wherein the negative active material satisfies at least one of the following conditions (k) to (n):

   (k) in an X-ray diffraction pattern of the negative active material, a maximum intensity value corresponding to a 2$\theta$ diffraction angle range of 28.0° to 29.0° is $I_2$, and a maximum intensity value corresponding to a diffraction angle range of 20.5° to 21.5° is $I_1$, satisfying 0 < $I_2/I_1$ $\leq$ 1;
   (l) a specific surface area of the negative active material is 1 m$^2$/g to 50 m$^2$/g;
   (m) a powder conductivity of the negative active material is 2.0 S/cm to 30 S/cm; or

(n) the negative active material further comprises graphite.

8. The negative active material according to claim 1, wherein a method for preparing the negative active material comprises the following steps: heat-treating a solution containing an oxide of silicon, a silicon source, a carbon source, and an organic solvent to obtain a heat-treated powder; and calcining the heat-treated powder, wherein the heat treatment is performed at a temperature of 80 °C to 120 °C; and/or the calcination comprises: calcining at a temperature of 600 °C to 1200 °C.

9. The negative active material according to claim 8, wherein the calcination comprises: calcining by increasing the temperature to 600 °C to 1200 °C at a heating rate of 3 °C/min to 10 °C/min.

10. An electrochemical device, comprising a negative electrode, wherein the negative electrode comprises the negative active material according to any one of claims 1 to 9.

11. An electronic device, comprising the electrochemical device according to claim 10.

FIG. 1

FIG. 2

| 200 nm | EHT = 10.00 kV | Signal A = InLens | Date :22 Jun 2021 | ZEISS |
| | WD = 4.6 mm | Mag = 30.00 K X | Time :15:40:00 | |

FIG. 3

FIG. 4

FIG. 5

FIG. 6

## INTERNATIONAL SEARCH REPORT

| International application No. |
|---|
| **PCT/CN2021/128701** |

**A.      CLASSIFICATION OF SUBJECT MATTER**

H01M 4/36(2006.01)i

According to International Patent Classification (IPC) or to both national classification and IPC

**B.      FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 负极, 阳极, 聚硅氧烷, 硅, 氧化硅, SiO, battery, negative, anode, polysiloxane, silicon, oxide

**C.      DOCUMENTS CONSIDERED TO BE RELEVANT**

| Category* | Citation of document, with indication, where appropriate, of the relevant passages | Relevant to claim No. |
|---|---|---|
| X | CN 1674325 A (SHIN-ETSU CHEMICAL CO., LTD.) 28 September 2005 (2005-09-28) description, p. 2, line 15 to p. 18, line 18, and embodiments 4-5, and figure 1 | 1-11 |
| X | CN 1505187 A (SHIN-ETSU CHEMICAL CO., LTD.) 16 June 2004 (2004-06-16) description, p. 2, line 7 to p. 9, line 3 | 1-11 |
| X | CN 1758466 A (SHIN-ETSU CHEMICAL CO., LTD.) 12 April 2006 (2006-04-12) reference example 3 | 1-11 |
| A | CN 109616654 A (HEFEI GUOXUAN HIGH-TECH POWER ENERGY CO., LTD.) 12 April 2019 (2019-04-12) entire document | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 June 2022** | **29 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

Information on patent family members

| International application No. |
| --- |
| **PCT/CN2021/128701** |

| Patent document cited in search report | | | Publication date (day/month/year) | Patent family member(s) | | | Publication date (day/month/year) |
| --- | --- | --- | --- | --- | --- | --- | --- |
| CN | 1674325 | A | 28 September 2005 | KR | 20060044724 | A | 16 May 2006 |
| | | | | TW | 200603473 | A | 16 January 2006 |
| | | | | US | 2005214644 | A1 | 29 September 2005 |
| | | | | JP | 2005310759 | A | 04 November 2005 |
| | | | | KR | 805133 | B1 | 21 February 2008 |
| | | | | CN | 100459245 | C | 04 February 2009 |
| | | | | US | 7790316 | B2 | 07 September 2010 |
| | | | | JP | 4623283 | B2 | 02 February 2011 |
| | | | | TW | I373160 | B | 21 September 2012 |
| CN | 1505187 | A | 16 June 2004 | KR | 20040047621 | A | 05 June 2004 |
| | | | | US | 2004106040 | A1 | 03 June 2004 |
| | | | | TW | 200415815 | A | 16 August 2004 |
| | | | | JP | 2004178917 | A | 24 June 2004 |
| | | | | CN | 1290212 | C | 13 December 2006 |
| | | | | JP | 4025995 | B2 | 26 December 2007 |
| | | | | US | 7358011 | B2 | 15 April 2008 |
| | | | | KR | 973633 | B1 | 02 August 2010 |
| | | | | TW | I331420 | B | 01 October 2010 |
| CN | 1758466 | A | 12 April 2006 | KR | 20060048900 | A | 18 May 2006 |
| | | | | TW | 200614573 | A | 01 May 2006 |
| | | | | US | 2006022198 | A1 | 02 February 2006 |
| | | | | JP | 2006062949 | A | 09 March 2006 |
| | | | | CN | 100533820 | C | 26 August 2009 |
| | | | | US | 7658863 | B2 | 09 February 2010 |
| | | | | KR | 101139205 | B1 | 26 April 2012 |
| | | | | JP | 4998662 | B2 | 15 August 2012 |
| | | | | TW | I396320 | B | 11 May 2013 |
| CN | 109616654 | A | 12 April 2019 | CN | 109616654 | B | 11 December 2020 |

Form PCT/ISA/210 (patent family annex) (January 2015)